# EUROPEAN PATENT SPECIFICATION

(11) **EP 3 597 035 B1**
(45) Date of publication and mention of the grant of the patent: **30.12.2020**
(21) Application number: 18798672.4
(22) Date of filing: 10.05.2018
(51) Int. Cl.: A01G 31/00, A01C 1/04

(54) **APPARATUS FOR PRODUCING SEED PAPER FOR HYDROPONIC CULTURE AND METHOD FOR PRODUCING SAID SEED PAPER**
VORRICHTUNG ZUR HERSTELLUNG EINES SAATPAPIERS FÜR HYDROPONISCHE KULTUR UND VERFAHREN ZUR HERSTELLUNG DES SAATPAPIERS
APPAREIL DE PRODUCTION DE PAPIER À GRAINES POUR CULTURE HYDROPONIQUE ET MÉTHODE DE PRODUCTION DUDIT PAPIER À GRAINES

(30) Priority: 11.05.2017 JP 2017094399
(43) Date of publication of application: 22.01.2020
(73) Proprietor: Elm Inc., Minamisatsuma-shi Kagoshima 897-1124 (JP)
(72) Inventor: MIYAHARA, Takakazu, Minamisatsuma-shi Kagoshima 897-1124 (JP); OBAG, John Cedric Villanueva, Minamisatsuma-shi Kagoshima 897-1124 (JP)
(74) Representative: Hoeger, Stellrecht & Partner Patentanwälte mbB
(86) International application number: PCT/JP2018/018028
(87) International publication number: WO 2018/207850

(56) References cited:
- JP-A- H05 284 810
- JP-A- H06 319 313
- JP-A- H06 319 313
- JP-A- H06 335 306
- JP-A- S60 259 107
- JP-U- H0 529 309
- JP-U- H0 660 306
- SE-B- 435 989

## Description

### TECHNICAL FIELD

The present invention relates to an apparatus for producing a seeded paper to be used for significantly saving seeding labor in the hydroponic culture using a mat culture medium, and in the hydroponic culture of baby leaves or such plants which require the uniform seeding of many seeds.

### BACKGROUND ART

Baby leaves or such immature vegetables, which have rapidly become popular in recent years, each have a small plant body. Thus, the culture medium is used wastefully in the usual seeding pitch, and the yield per one unit area is low. In view of them, it is necessary to perform the seeding with a pitch narrower than that for general vegetables, in order to increase the cultivation efficiency and to increase the yield. If seeds are sown with a pitch of 15 mm, for example, 4,400 seeds are sown per one square meter. In this case, if this labor is performed by manpower, a large amount of labor cost is required. Accordingly, a labor-saving technique is required particularly in such a field.

In order to solve the aforementioned problem, a tape called a seeder tape, a seeding apparatus, and so on have been used. In the seeder tape, seeds are attached at substantially equal intervals on a tape or the like made of a PVA (polyvinyl alcohol or poval) film which is water dissolvable. The seeding apparatus uses a plate provided with holes at equal intervals. However, such a tape allows only a single line of seeds to be sown at a single seeding, and thus the efficiency is not adequately improved. Furthermore, if such a tape is used in the hydroponic culture, the PVA which is hardly decomposed is dissolved in the cultivation water to impose a negative effect.

Meanwhile, the seeding by a seeding apparatus remarkably increases the seeding efficiency in soil culture. However, in the hydroponic culture in which no soil is used, another form of labor, such as pushing the sown seeds into a culture medium, is required. Thus, it is difficult to increase the efficiency in the hydroponic culture in comparison with the soil culture.

As disclosed in Patent Literatures 1 to 7, an idea has been realized in which: adhesive spots each having necessary size and shape are provided on a base material that is a rolled or flat sheet paper or other material; seeds are fixedly attached to the adhesive spots on the base material; and the thus prepared sheet is placed in a field or a culture container, thereby substantially saving the labor in seeding. Here, in every method in the Patent Literatures, the adhesive is applied to the base material made of a relatively tough paper, the seeds are fixedly attached by the adhesive, and in addition a protection layer made of a sheet of PVA or paper is a covered on the surface of the base material for preventing the separation of seeds. As such, every method in the Patent Literatures is mainly directed to the soil culture. In addition, these methods give attention to the cultivation of general vegetables that take a few weeks or a few months for the cultivation. Accordingly, these methods are not optimal for sowing the seeds of immature vegetables or young plants the growing periods of which are short. Patent Literatures 8 and 9 disclose other apparatus for fixing seeds on sheets.

### CITATION LIST

### PATENT LITERATURE

Patent Literature 1: JP H05-292805 A
Patent Literature 2: JP H07-274619 A
Patent Literature 3: JP H07-031219 A
Patent Literature 4: JP 2000-060223 A
Patent Literature 5: JP 2002-305914 A
Patent Literature 6: JP H10-136711 A
Patent Literature 7: JP H06-060306 U
Patent Literature 8: JP H06-319313 A
Patent Literature 9: SE 435 989 B

### SUMMARY OF INVENTION

### TECHNICAL PROBLEM

If, in the hydroponic culture using a sheet culture medium to produce immature vegetables with a growing period of about one to three weeks, the paper of the sheet is tough, the sheet may remain on the culture medium until harvesting, and may be mingled in the vegetables. Furthermore, PVA in the protection layer is gradually dissolved in the cultivation water but is not decomposed, which causes the density of PVA in the nutrient solution to gradually increase. Accordingly, the flow of the nutrient solution is adversely affected, or leakage occurs due to bubbling. In addition, the increased density of PVA may cause a barrier to the growth of the vegetables. Furthermore, the large amount of material increases the material cost as well as the production cost. Thus, the ideas according to Patent Literatures 1 to 7 are not suitable for the cultivation of immature vegetables whose additional value per one piece is small.

The present invention is made for solving the aforementioned problems. An object of the present invention is to provide an apparatus for producing, at low cost, a seeded paper for substantially saving the labor in seeding, in the production of immature vegetables and others in the hydroponic culture.

### SOLUTION TO PROBLEM

The seeded paper developed for solving the previously described problem includes a base sheet that is made of water-decomposable paper and provided with a plurality of concave portions each having the plane shape approximately equal to a shape of a target seed and depth of one tenth to equal to the height of the target seed, in which a target seed adheres to an inside area of each of the concave portions by a water-soluble adhesive.

The base sheet used for the seeded paper is a water-decomposable paper. For the base sheet, a paper that has a quality defined in JIS P 4501-1993 that is the Japanese Industrial Standard for toilet paper (basis weight: 18 g/m² or more, bursting strength (10 sheets): 78 kPa or more, and disentanglement: 100s or less) can be used, for example.

As the target seeds for the seeded paper all kinds of seeds that can be cultivated by the hydroponic culture and have a size of approximately in the range of 0.3 mm or more and 5 mm or less can be used. For example, mizuna (potherb mustard) and lollo rossa which have been highly demanded as baby leaves in recent years can be suitably subjected to the seeded paper.

In the seeded paper, the seeds are individually placed in a plurality of concave portions provided in the base sheet. The concave portions have the shape mentioned earlier, and thus the seeds are covered by the base sheet by at least one tenth of their height, and adhere to the base sheet by the adhesive. Accordingly, the adhesion of the seeds to the base sheet is assured, thereby preventing the seeds from separating from the base sheet during their transportation and placement to the hydroponic culture medium. The placement can be performed by a machine.

In the seeded paper, the base sheet is water decomposable. Accordingly, the base sheet is gradually decomposed during the hydroponic culture. The decomposition by water may include two aspects, such as physical separation due to the existence of water, and decomposition by microorganisms and other living creatures in water. The components of the base sheet decomposed by water disappear from the surface of the culture medium, and are removed from the culture medium by the water. The components of the decomposed paper are not soluble in water, and thus can be removed from the water using a filter or the like. That is, such components are not accumulated in water, unlike PVA or the like. Thus, water circulation can be performed for an elongated time in the hydroponic culture.

In addition, a water-soluble adhesive is used for the adhesive for fixedly attaching the seeds to the base sheet. Accordingly, a part of the base sheet which adheres to the seeds and the adhesive itself are washed away by the water. In the present invention, the usage amount of the adhesive (adhesion area) is small with respect to the entire area of the seeded paper. Thus, the adhesive does not prevent the long term circulation treatment of the water.

The seeded paper production apparatus according to the present invention is defined in claim 1 and includes:
a) a base sheet supply section configured to supply a long base sheet made of water-decomposable paper;
b) an adhesive application section configured to apply a water-soluble adhesive to a surface of the long base sheet supplied from the base sheet supply section, at a predetermined interval;
c) a seed placing section configured to place multiple seeds on the surface of the long base sheet;
d) a removal section configured to remove, from the long base sheet, a seed that fails to adhere to the long base sheet; and
e) a seed fixation section configured to transport the long base sheet that has passed through the removal section by rolling the long base sheet between a pair of rollers softer than the seed, wherein the roller which is located on a side of the seed is harder than the roller on a side of the long base sheet.

When multiple seeds are placed, in the seed placing section, on the long base sheet to which the adhesive is applied, seeds at the positions where the adhesive is applied on the long base sheet adhere to the long base sheet, and seeds at positions other than the adhesive-applied positions do not adhere to the long base sheet. Thus, the long base sheet that has passed through the removal section is in the state that the seeds adhere only to the positions where the adhesive is applied, by removing, from the long base sheet, the seeds that do not adhere to the long base sheet in the removal section. The simplest method of removing the seeds that do not adhere to the long base sheet in the removal section, is to use gravity. In other words, the seeds that do not adhere to the base sheet can be removed only by inclining the long base sheet, turning the long base sheet upside down, or the like. In addition to the passive removal, an active removal including blowing or vibrating can be used. The seeds removed in this section can be used again in the seed placing section.

In the seed fixation section, the long base sheet that has passed through the removal section is sandwiched by a pair of rollers softer than the seed and the rollers are rotated, so that the long base sheet is transported forward. The hardness of the pair of the rollers is set at such level, so that the seeds adhering to the long base sheet are embedded between the rollers without being crushed by the rollers. With this configuration, the concave portions are formed on the long base sheet, and the seeds are embedded in the concave portions by at least one tenth of their height. At this time, the adhesive existing between the seed and the long base sheet is spread by the pressure between the two rollers, thereby the adhesive area increases. Accordingly, the seeds more assuredly adhere to the long base sheet.

In the present invention, the roller on the side of the seeds is harder than the roller on the side of the long base sheet. With this configuration, the seeds adhering to the long base sheet are pushed deeper into the long base sheet, and thus the concave portions having the depth of one tenth to equal to the height of the seeds are formed in the long base sheet. The seeds are thus embedded in the concave portions.

In the base sheet supply section, the rolled (or folded) long base sheet may be drawn out by the transportation force by the pair of rollers in the seed fixation section.

The long base sheet (seeded paper) with the seeds, which has passed through the seed fixation section, may be wound or cut to an appropriate size so as to be in a sheet form.

### ADVANTAGEOUS EFFECTS OF INVENTION

In the seeded paper the base sheet is water decomposable. Accordingly, the base sheet is physically decomposed or is decomposed by microorganisms, gradually during the hydroponic culture, so as to disappear from the surface of a cultivation medium and to be washed away by water. The components of the decomposed base sheet can be removed from the water by a filter or the like, and thus are not accumulated in the water, unlike PVA and so on. Thus, the water circulation in the hydroponic culture can be performed for a long time. The water-soluble adhesive for fixedly attaching the seeds to the base sheet is also mixed in the water of the hydroponic culture. However, the usage amount of the adhesive (adhesion area) is small with respect to the entire area of the seeded paper. Thus, the adhesive does not prevent the long term circulative usage of the water.

Therefore, the seeded paper is suitable for the hydroponic culture. In the production of immature vegetables, such as baby leaves, in particular, the labor in seeding can be significantly saved.

The seeded paper production apparatus according to the present invention can produce such a seeded paper in large numbers, at high efficiency and low cost.

### BRIEF DESCRIPTION OF DRAWINGS

Fig. 1 is a schematic diagram of the entire configuration of a seeded paper production apparatus according to an embodiment of the present invention.
Fig. 2 is a cross sectional view of the schematic configuration of a first buffer section B and a second buffer section G of the seeded paper production apparatus according to the embodiment.
Fig. 3 is a schematic plane view of an adhesive printing section C of the seeded paper production apparatus according to the embodiment.
Fig. 4 is a schematic side view of the adhesive printing section C and a base sheet holding section J1 of the seeded paper production apparatus according to the embodiment.
Fig. 5 is a perspective view of an example of the suction plate of a seed adhesion section D of the seeded paper production apparatus according to the embodiment.
Fig. 6 is a schematic cross-sectional view of a base sheet transportation/seed pressing section E of the seeded paper production apparatus according to the embodiment.
Fig. 7 is a plane view of an example of the seeded paper produced by the seeded paper production apparatus according to the embodiment.
Fig. 8 is a plane view of an example of the hydroponic culture tray in which a plurality of the seeded papers produced by the seeded paper production apparatus according to the embodiment are placed.

### DESCRIPTION OF EMBODIMENTS

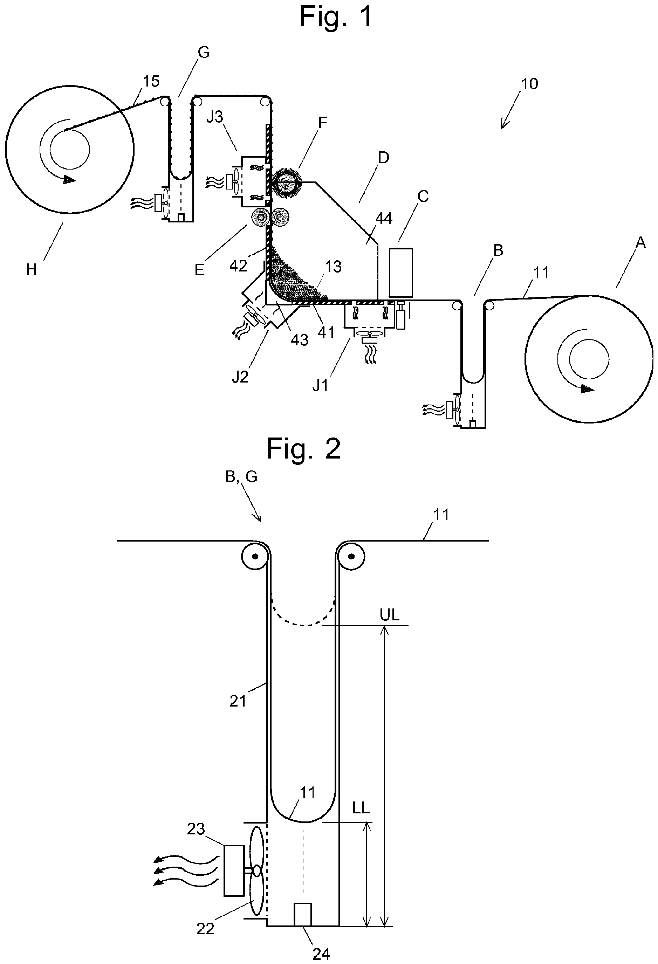

An embodiment of the hydroponic-culture seeded paper production apparatus according to the present invention is described, using Figs. 1 to 6. As shown in Fig. 1, a seeded paper production apparatus 10 according to the present embodiment includes the following sections.
- a base sheet supply section A for supplying a long base sheet 11 made of water-decomposable paper,
- a first buffer section B for feeding the long base sheet 11 without applying an excess stress (tensile force) to the long base sheet 11 in response to the demand of intermittent transportation of the long base sheet 11 from the sections at the later stage, i.e., an adhesive printing section C and the base sheet transportation/seed pressing section E,
- an adhesive printing section C for applying an adhesive 12 to the long base sheet 11 at a predetermined interval for fixedly attaching the seeds 13 to the long base sheet 11,
- a seed adhesion section D for allowing the seeds 13 to adhere to adhesive points applied to the long base sheet 11,
- a base sheet transportation/seed pressing section E performing (i) base sheet transportation in which the long base sheet 11 is intermittently transported with a predetermined distance so that the adhesive points are printed on the long base sheet 11 in the length direction at the predetermined interval (the predetermined distance is called a transportation pitch. It should be noted that the transportation pitch may be different from the aforementioned predetermined interval.), and (ii) seed press in which the seeds 13 adhering to the adhesive points are pressed into the long base sheet 11 for being fixedly attached to the long base sheet 11 without fail,
- an active removal section F for removing, with a soft rotary brush or other tools, remaining seeds that still adhere to the long base sheet 11 due to static electricity or the like and excess seeds that adhere to a protruding adhesive,
- a second buffer section G for buffering, without applying excess stress, the rapid movement of the long base sheet 11 in order to wind the seeded paper 15 that is intermittently transported, where the seeded paper 15 is the long base sheet 11 to which the seeds 13 adhere at the predetermined interval,
- a base sheet winding section H for winding the seeded paper 15, and
- base sheet holding sections J1 to J3 provided at appropriate positions for holding the long base sheet 11 (or the seeded paper 15) with an appropriate force using negative pressure when the transportation is stopped, while applying no excess stress to the long base sheet 11 (or the seeded paper 15) when the long base sheet 11 (or the seeded paper 15) moves.

As shown in Fig. 2, the first buffer section B and the second buffer section G have a mechanism in which the long base sheet 11 sags down into the inside of each of the buffer sections, for avoiding the application of excessive force to the long base sheet 11 during the intermittent transportation of the long base sheet 11. Accordingly, both the first buffer section B and the second buffer section G have a vertically long body 21 with an open top having the width slightly wider than the width of the long base sheet 11, the length (thickness) of a few cm in the feeding direction of the long base sheet 11, and the height (depth) of 20 to 30 cm. The body 21 includes, in its lower part, a fan 22 for discharging the air inside the body 21 to outside, a motor 23 for rotating the fan 22, and a sensor 24 capable of measuring the height of the lower end (bottom face) of the sagging part of the long base sheet 11 sucked into the body 21.

When the long base sheet 11 is placed from the base sheet supply section A to the base sheet winding section H over the respective sections B to G, and then the first buffer section B and the second buffer section G are operated, the fan 22 in the lower side of each of the buffer sections B and G rotates to suck the long base sheet 11 into the body 21. The sensor 24 detects the distance from the long base sheet 11 to the bottom face of the body 21.

When the bottom face of the long base sheet 11 is above the upper limit (UL) as shown by the dotted line, the long base sheet 11 is supplied by releasing the brake of the base sheet supply section A, or by driving a supply motor. When the lower end part of the long base sheet 11 reaches the lower limit (LL), the supplying of the base sheet from the base sheet supply section A is stopped. It should be noted that the supplied amount of the base sheet from the base sheet supply section A (the length of the long base sheet 11 supplied from the base sheet supply section A) at this time has no relation to the transportation pitch to be described later.

Although the sensor 24 is illustrated in the drawings and described in the description as an ultrasonic distance sensor, the same function can also be achieved by placing reflection optical sensors or transmission optical sensors on the positions indicated by LL (lower limit part) and UL (upper limit part) in the side wall of the body 21. Although Fig. 2 shows an example where the sensor 24 is placed in the lower part of the body 21, the same function can be realized by placing the sensor 24 in the upper part of the body 21. The first buffer section B and the second buffer section G may be constituted so that the long base sheet 11 is sagged in the lateral direction or in the reverse direction (sucked upward) (the long base sheet 11 is a thin paper, like toilet paper to be described later, and thus the motor 23 having high power is not needed even in such cases), in addition to the downward direction as shown in Fig. 2. Even in such situations, the functions of both the first buffer section B and the second buffer section G are not affected, if the condition that the suction force by the fan 22 is adequately assured.

Although Fig. 2 shows an example in which the small fan 22 is individually provided in each of the first buffer section B and the second buffer section G, a single large fan may be used and the suction force of the large fan is divided by a pipe or the like.

As previously mentioned, the base sheet supply section A and the first buffer section B cooperate to supply, at the necessary timing, the long base sheet 11 with a length required in later steps. Here, the tension force applied from the first buffer section B to the long base sheet 11 is caused by weak suction force of the fan 22. In addition, there is no mass except for that of the long base sheet 11 that affects the inertia during the movement of the long base sheet 11. Accordingly, even if the adhesive printing section C in the later stage applies the intermittent force to the long base sheet 11, strong tension is not applied to the long base sheet 11. Accordingly, even if the long base sheet 11 is single-ply fragile toilet paper, it can be used in this hydroponic-culture seeded paper production apparatus.

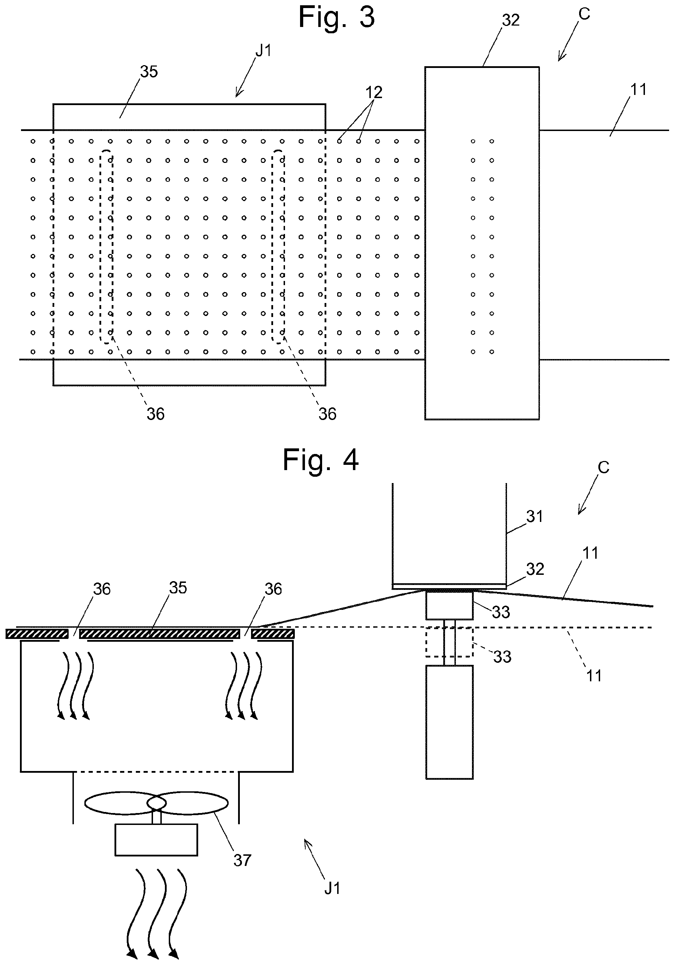

Next, the operation of the adhesive printing section C is described with reference to Fig. 3.

The seeded paper 15 is mainly used in the hydroponic culture of immature vegetables most of which grow in a short period. Thus, when used with the base sheet side facing upward, the seeded paper 15 is required to allow the emerging sprouts to easily penetrate the base sheet to grow upward, whereas when used with the base sheet side facing downward, the seeded paper 15 is required to allow the emerging roots to easily penetrate the base sheet to grow into the culture medium. For these reasons, a dimensionally and materially thin paper that is easily decomposed by water is suitable for the long base sheet 11. For example, a paper having the quality (the basis weight: 18g/m² or more, bursting strength: 78 kPa (10 sheets) or more, disentanglement: 100s or less) defined in JIS P 4501-1993 in terms of toilet paper can be used, as mentioned earlier.

If a general adhesive is applied to such a thin and sparse paper, the adhesive quickly permeates the paper and diffuses in the paper, and only inadequate amount of adhesive remains on the surface of a paper, which lowers the bonding force of the seeds. Furthermore, the diffused adhesive broadens the adhesive area on the surface of the base sheet, causing excess seeds to adhere to the base sheet.

In order to solve these problems, it is necessary to accurately print an adhesive having high viscosity so as to not easily permeate a paper and/or diffuse in a paper, on an area corresponding to a single seed, without causing a plurality of seeds to adhere to such an area. For this, a silk-screen printing method is suitable.

According to the silk-screen printing, a mask 32 made from a thin metal plate or a plastic sheet, is prepared according to the size of the seeds or the pitch of the sowing. Thus, as shown in Fig. 3, multiple spots of the adhesive in the plural rows (12 spots × two rows, in Fig. 3) can be printed at once, thereby achieving high efficiency.

Accordingly, when the adhesive 12 is printed on the long base sheet 11 by this method, a printer 31 and the mask 32 should have a certain size in the feeding direction. Accordingly, it is difficult for the printer 31 and the mask 32 to reduce their size to be smaller than the feeding amount (transportation pitch) of the long base sheet 11 in the intermittent transportation. If such a size is smaller than the feeding amount, the previously printed adhesive comes in contact with the mask 32 at the next printing. In order to prevent such contact, a push-up member 33 having substantially the same width (the size in the transportation direction) as that of the transportation pitch to push up the long base sheet 11 when printing is performed, as shown in Fig. 4, and the push-up member 33 is lowered to the position indicated by the dotted line when the long base sheet 11 is moved. Accordingly, the adhesive 12 printed on the long base sheet 11 can be prevented from being rubbed with the mask 32 and so on to deform its shape.

The structure of the printer 31 does not directly relate to the object of the present invention, and thus its details are not shown. Here, various structures are devised and produced for the printer in which an appropriate amount of adhesive is held on the top face of the mask 32, a squeegee is reciprocated in the width direction of the long base sheet 11 at every printing, to print the adhesive 12 on the long base sheet 11 through holes in the mask 32.

For the adhesive to be used in the adhesive printing section C, a water-soluble adhesive derived from a plant, such as starch glue or xanthan gum, is used. These glues are derived from plants, and thus are easily decomposed by microorganisms or other living creatures in water.

As mentioned earlier, the base sheet 11 in which the adhesive 12 is printed at the predetermined interval is continuously sent to the seed adhesion section D.

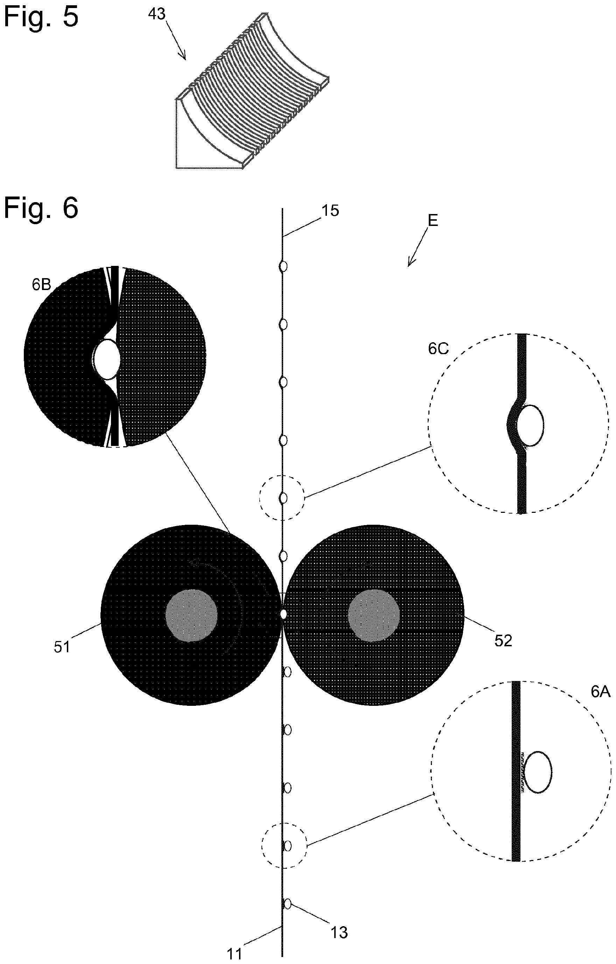

In the seed adhesion section D, a horizontal backboard 41 and a vertical backboard 42 are respectively provided in the horizontal direction and the vertical direction along the transportation direction of the long base sheet 11, and a suction plate 43 having multiple slits extending in the transportation direction for suction is provided between the both backboards 41 and 42. Guide plats 44 are respectively provided at the widthwise ends of these backboards. A base sheet holding section J2 is provided at the back of the suction plate 43. Fig. 5 shows an example of the suction plate 43. The long base sheet 11 is sucked by the base sheet holding section J2 while moving along the horizontal backboard 41, the suction plate 43 and the vertical backboard 42, so that the transportation direction of the long base sheet 11 is changed from the horizontal direction to the vertical direction. Seeds 13 are supplied in the space defined by both guide plates 44 and the long base sheet 11 which changes its direction by 90 degrees. Accordingly, the seeds 13 individually adhere to the adhesive 12 on the adhesive points printed on the long base sheet 11.

The seeds 13 are first transported toward the left side of Fig. 1 with the movement of the long base sheet 11 in the horizontal direction. Then, the long base sheet 11 changes its direction to the vertical direction, so as to be pulled upward. At a certain height, the seeds 13 fall down due to gravity forming a lump as shown in Fig. 1. In the lump, the seeds 13 roll and move around on the long base sheet 11, so that they pass on the adhesive points. Accordingly, the seeds 13 have many chances of being trapped by the adhesive 12 on the adhesive points on the long base sheet 11, and it is highly probable that every adhesive point is occupied by a seed. Otherwise, the seeds 13 are substantially removed from the long base sheet 11 except for the adhesive points. As such, the seed adhesion section D also serves as the removal section of the present invention.

The essential structure of the seed adhesion section D is that it includes, at its left and right sides, the guide plates 44 respectively, and that it changes the moving direction of the long base sheet 11 from the approximately horizontal direction to the approximately vertical direction. Other factors such as the angle or curve of changing the transportation direction of the long base sheet 11 are less important as the elements of the invention. The suction force by the fan is used in the present embodiment for more assuredly holding the long base sheet 11 in response to the change in its angle. However, even without the suction force by the fan, the lump of the seeds 13 can remain in the state shown in Fig. 1 by the movement of the long base sheet 11 in the transportation direction, by the weight of the seeds 13, and by the friction between the long base sheet 11 and the seeds 13 combined.

Then, the long base sheet 11 to which the seeds 13 adhere reaches the base sheet transportation/seed pressing section E which is provided upward. The base sheet transportation/seed pressing section E performs the seed press for assuredly fixing the seeds adhering to the adhesive points, on the long base sheet 11, and the base sheet transportation for accurately moving the long base sheet 11 by the predetermined transportation pitch. The base sheet transportation/seed pressing section E is described with reference to Fig. 6.

The seeds 13 that have been attached to the long base sheet 11 in the seed adhesion section D easily depart from the long base sheet 11, since only a part of each seed 13 contacts the adhesive 12 printed on the surface of the long base sheet 11, as shown in the enlarged view of Fig. 6A.

To solve such a problem, in the apparatus according to the embodiment, two rollers 51 and 52 made of a soft sponge-like material are pressed to each other and synchronously rotated (it should be noted that only one of the rollers can be driven by motor and the other one can follow the motor-driven roller), and the long base sheet 11 is passed between the rollers 51 and 52. Accordingly, as shown in the enlarged drawing of Fig. 6B, the seeds 13 are pressed to the long base sheet 11 to cause the long base sheet 11 to be dented, so that the adhesion surface of the seeds 13 with the adhesive 12 is enlarged, thereby assuredly attaching the seeds 13 to the long base sheet 11 (the enlarged drawing of Fig. 6C).

According to the invention, the roller 51 in the base sheet side has the hardness E1 lower than the hardness E2 of the roller 52 in the seed side (E2 ≥ E1), for further pressing the seeds 13 into the long base sheet 11. Here, if the hardness E2 of the roller 52 in the seed side is too high and the hardness of the long base sheet 11 is too low, a seed 13 may break through the long base sheet 11 and fall off. Accordingly, it is necessary for the hardness E2 of the roller 52 in the seed side to be appropriately soft depending on the kinds of target seeds 13.

Although the rollers 51 and 52 are used for both sides of the seeded paper 15 in this apparatus, the same function can be realized by using a belt for at least one of the sides.

With the aforementioned configuration, the seeds 13 firmly and fixedly adhere to the adhesive points in the long base sheet 11. It is possible that seeds may attach to the long base sheet 11 at a part out of the adhesive points due to static electricity or the like, or a few seeds may adhere to a single adhesive point due to the protruding adhesive. In view of such cases, it is preferable that the active removal section F using a soft brush or the like is provided for removing the excess seeds 13. Although Fig. 1 shows an example using the rotating brush, a fixed brush including a soft brush may be used.

It should be noted that such an active removal section F may be unnecessary depending on the kind of seeds 13.

The base sheet holding sections J1 to J3, which use the suction force by the fan for holding the long base sheet 11, are placed at appropriate places of the seeded paper production apparatus according to the present embodiment. Figs. 3 and 4 show the base sheet holding section J1 placed immediately after the adhesive printing section C. It is necessary to precisely move the long base sheet 11 by the predetermined transportation pitch and to assuredly hold the long base sheet 11 for making seeds 13 uniformly adhere to the long base sheet 11. However, the long base sheet 11 of the seeded paper 15 in the present embodiment is dimensionally and materially thin like toilet paper, as previously mentioned, and thus it is very difficult to press the base sheet 11 by the rollers or others without breaking the base sheet 11. If friction and inertia on the seeded paper 15 increases while it is transported, a large tension is exerted to base sheet 11, which is not preferable. In view of this, in the apparatus of the present embodiment, the base sheet holding sections J1 to J3 are provided for statically holding the long base sheet 11 between the intermittent transportation. In these base sheet holding sections J1 to J3, a plurality of holes or slits 36 are provided in a transportation surface 35 on which the long base sheet 11 moves, and air is sucked through these holes or slits 36 by the fan 37, thereby holding the long base sheet 11 to the transportation surface 35. The holding force can be determined at a desired level by appropriately setting the size or the number of the holes, or the shapes of the slits 36. Furthermore, the holding force can easily be adjusted by the rotation speed (air-intake force) of the fan 37. In this mechanism, no force except the friction between the long base sheet 11 and the transportation surface 35 due to the own weight of the long base sheet 11 is given to the long base sheet 11 in its longitudinal direction. Thus, even when the long base sheet 11 is intermittently transported, no strong tension is exerted to the long base sheet 11, so that thin paper can be used in this processing without breaking it.

Although Fig. 1 shows an example in which a small fan 37 is individually used in each of the base sheet holding section J1 to J3, it is possible to use a single large fan, and divide the suction force of this fan with a pipe or the like. Furthermore, the base sheet holding can be performed by employing static electricity instead of the air-intake by fan.

In the apparatus according to the aforementioned embodiment, the width of the long base sheet 11 can be freely determined in the range from the toilet-paper width or the like to several tens of cm, depending on the request from cultivation methods or apparatuses, without significantly changing the basic configuration of the apparatus.

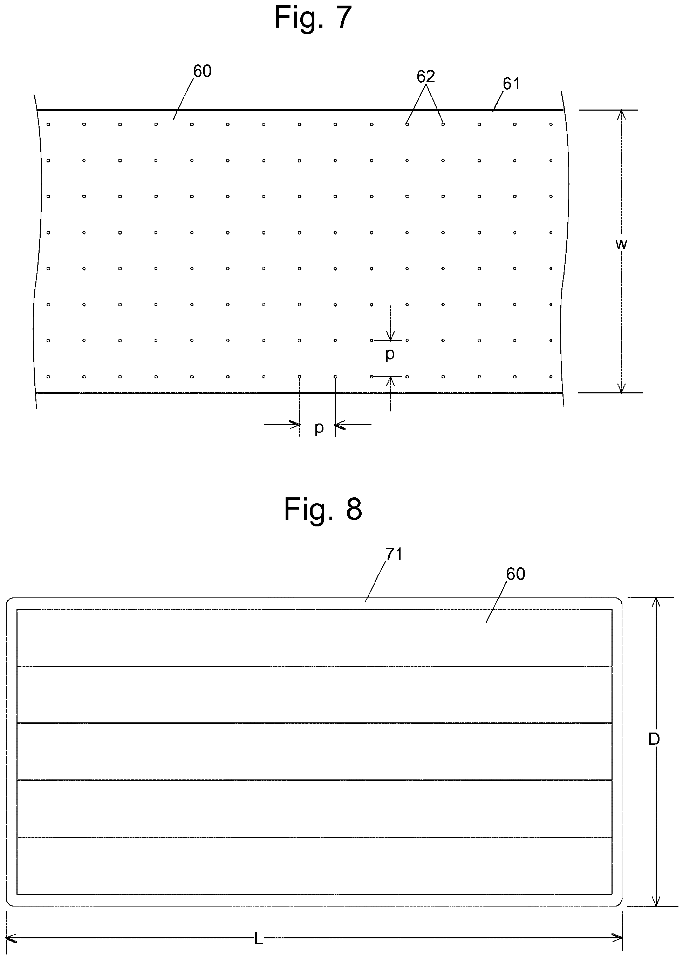

Now, an example of the seeded paper produced by the seeded paper production apparatus according to the present embodiment, and an example of the cultivation using the seeded paper are described with reference to Figs. 7 and 8.

Fig. 7 is an example of the seeded paper 60 in which seeds 62 adhere to a base sheet 61 having the width substantially the same as that of toilet paper (w = 110 mm), with an equal pitch laterally and longitudinally. The adhesion pitch p for the adhesion of the seeds 62 can be freely determined depending on the kind of target plants and the cultivation method (or the cultivation period). For example, when immature vegetables of mizuna (potherb mustard), which grow upwards in a short period of time, are produced, 14 mm pitch is used.If the immature vegetable of lollo rossa, which tend to grow in the horizontal direction, is produced, 18 mm pitch is used. However, if the lollo rossa is grown for full-grown vegetable instead of baby leaves, 28 mm pitch is used. As such, the optimal seeded paper is produced and provided depending on the kind of vegetables and the object and the cultivation period, which significantly enhances the productivity of the vegetables. It should be noted that the pitches in the lateral and longitudinal directions are not necessarily the same.

An example of the cultivation of baby leaves by the hydroponic culture, using a tray 71, as shown in Fig. 8, having the width L and the depth D is described. If the width L and the depth D of this tray 71 are respectively set to 1,200 mm and 600 mm, and the seeded paper having the pitch p = 14 mm is placed on the culture medium inside the tray 71, it is calculated that about 3,300 seeds are necessary to be seeded. If manpower is used for the seeding, it takes about one hour. Various seeding tools that are commercially available may be used. However, if seeds are merely placed on the culture medium by such seeding tools and the culture medium is made of a material that allows the seeds to move, another operation, such as the pressing of seeds into the culture medium, is required. Accordingly, it is difficult to significantly save the amount of labor.

In recent years, vegetable factories have been increased, so that the labor relating to the cultivation itself can be significantly saved. However, manpower is required for seeding, harvesting, and controlling, and thus the profitability is not improved whatsoever. In particular, immature vegetables, such as baby leaves, have a small plant body, so that the seeding should be performed for many seeds. In addition, harvesting should be made for a large amount of crops. Thus, the labor productivity in terms of the seeding and harvesting is low, causing such immature vegetables to be traded at high prices.

However, the labor cost required for the seeding can be significantly reduced by cultivating the baby leaves by the hydroponic culture using the seeded paper according to the present invention.

For example, when the seeded paper 60 having the width w = 110 mm shown in Fig. 7 is used, eight seeds are laid laterally. In this paper, if the length is set to 1,160 mm, for example, there are 656 (8 × 82 = 656) seeds on the seeded paper 60. Such a paper is cut into a necessary length, and the cut papers are placed side by side (five lines for the tray shown in Fig. 8). Only with such an operation, 3,280 (656 × 5 = 3,280) seeds can be sown in a few seconds to several tens of seconds.

For more efficient seeding, it is only required to increase the width of the seeded paper 60. If a seeded paper with the width of 570 mm is used, for example, the seeding to a tray 71 is completed only by placing a single seeded paper on the tray 71.

It is also possible to efficiently produce mixed baby leaves at a ratio in response to the marketing demand by appropriately setting each kind of seeded paper 60 (kinds of the vegetables) among the five seeded papers in Fig. 8.

### REFERENCE SIGNS LIST

- 10: Seeded Paper Production Apparatus
- A: Base Sheet Supply Section
- B: First Buffer Section
- C: Adhesive Printing Section
- D: Seed Adhesion Section
- E: Base Sheet Transportation/Seed Pressing Section
- F: Active Removal Section
- G: Second Buffer Section
- H: Base Sheet Winding Section
- 11: Long Base Sheet
- 12: Adhesive
- 13: Seed
- 15: Seeded Paper
- J1, J2, J3: Base Sheet Holding Section
- 21: Body of Buffer Section
- 22: Fan of Buffer Section
- 23: Motor of Buffer Section
- 24: Sensor of Buffer Section
- 31: Printer
- 32: Mask
- 33: Push-up Member
- 35: Transportation Surface
- 36: Hole, Slit
- 37: Fan
- 41: Horizontal Backboard
- 42: Vertical Backboard
- 43: Suction Plate
- 44: Guide Plate
- 51, 52: Roller
- 60: Seeded Paper
- 61: Base Sheet
- 62: Seed
- 71: Tray

## Claims

1. A hydroponic-culture seeded paper production apparatus (10) comprising:
a) a base sheet supply section (A) configured to supply a long base sheet (11);
b) an adhesive application section (C) configured to apply a water-soluble adhesive (12) to a surface of the long base sheet (11) supplied from the base sheet supply section (A), at a predetermined interval;
c) a seed placing section (D) configured to place multiple seeds (13) on the surface of the long base sheet;
d) a removal section (D) configured to remove, from the long base sheet (11), a seed (13) that fails to adhere to the long base sheet (11); and
e) a seed fixation section (E) configured to transport the long base sheet (11) that has passed through the removal section (D) by rolling the long base sheet (11) between a pair of rollers (51, 52) softer than the seed (13), wherein the roller (52) which is located on a side of the seed (13) is harder than the roller (51) which is located on a side of the long base sheet (11).

2. The hydroponic-culture seeded paper production apparatus (10) according to claim 1, wherein
the seed fixation section (E) rotates so that the long base sheet (11) is intermittently transported with a predetermined pitch.

3. The hydroponic-culture seeded paper production apparatus (10) according to any one of claims 1 and 2, further comprising a buffer section (B) configured to allow the long base sheet (11) to sag, between the base sheet supply section (A) and the seed fixation section (E).

4. The hydroponic-culture seeded paper production apparatus (10) according to any one of the preceding claims, further comprising a base sheet holding section (J1) configured to suck the long base sheet (11) to a transportation surface (35), between the base sheet supply section (A) and the seed fixation section (E).

5. The hydroponic-culture seeded paper production apparatus according to any one of the preceding claims, further comprising an active removal section (F) configured to actively remove an excess seed (13) from the long base sheet (11), following the seed fixation section (E).

6. A method for producing a hydroponic-culture seeded paper (10), comprising following successive processes:
an adhesive application process configured to apply a water-soluble adhesive (12) to a surface of a long base sheet (11) at a predetermined interval;
a seed placing process configured to place multiple seeds (13) on the surface of the long base sheet (11);
a seed removal process in a removal section (D) configured to remove, from the long base sheet (11), a seed (13) that fails to adhere to the long base sheet (11); and
a seed fixation process configured to transport the long base sheet (11) that has passed through the removal section (D) by rolling the long base sheet (11) between a pair of rollers (51, 52) softer than the seed (13), wherein the roller (52) which is located on a side of the seed (13) is harder than the roller (51) on a side of the long base sheet (11).

## Patentansprüche

1. Vorrichtung (10) zur Erzeugung von Saatgutpapier für Hydroponikkultur, umfassend:
a) einen Basisblatt-Zuführabschnitt (A), welcher ausgebildet ist, ein langes Basisblatt (11) zuzuführen;
b) einen Adhäsivmaterial-Aufbringungsabschnitt (C), welcher ausgebildet ist, ein wasserlösliches Adhäsivmaterial (12) auf eine Oberfläche des langen Basisblatts (11), welches von dem Basisblatt-Zuführabschnitt (A) zugeführt wird, in einem vorbestimmten Intervall aufzubringen;
c) einen Saatgut-Platzierungsabschnitt (D), welcher ausgebildet ist, mehrere Samen (13) auf der Oberfläche des langen Basisblatts zu platzieren;
d) einen Entfernungsabschnitt (D), welcher ausgebildet ist, von dem langen Basisblatt (11) einen Samen (13) zu entfernen, der darin versagt, an dem langen Basisblatt (11) zu haften; und
e) einen Saatgut-Fixierungsabschnitt (E), welcher ausgebildet ist, das lange Basisblatt (11), welches den Entfernungsabschnitt (D) durchlaufen hat, durch Walzen des langen Basisblatts (11) zwischen einem Paar von Rollen (51, 52), welche weicher sind als das Saatgut (13), zu transportieren, wobei die Rolle (52), die sich auf einer Seite des Saatguts (13) befindet, härter ist als die Rolle (51), welche sich auf einer Seite des langen Basisblatts (11) befindet.

2. Vorrichtung (10) zur Erzeugung von Saatgutpapier für Hydroponikkultur nach Anspruch 1, wobei
der Saatgut-Fixierungsabschnitt (E) rotiert, so dass das lange Basisblatt (11) intermittierend mit einer vorbestimmten Teilung transportiert wird.

3. Vorrichtung (10) zur Erzeugung von Saatgutpapier für Hydroponikkultur nach einem der Ansprüche 1 und 2, ferner umfassend einen Pufferabschnitt (B), welcher ausgebildet ist, das lange Basisblatt (11) zwischen dem Basisblatt-Zuführabschnitt (A) und dem Saatgut-Fixierungsabschnitt (E) durchhängen zu lassen.

4. Vorrichtung (10) zur Erzeugung von Saatgutpapier für Hydroponikkultur nach einem der voranstehenden Ansprüche, ferner umfassend einen Basisblatt-Halteabschnitt (J1), welcher ausgebildet ist, das lange Basisblatt (11) zu einer Transportoberfläche (35) zwischen dem Basisblatt-Zuführabschnitt (A) und dem Saatgut-Fixierungsabschnitt (E) zu saugen.

5. Vorrichtung zur Erzeugung von Saatgutpapier für Hydroponikkultur nach einem der voranstehenden Ansprüche, ferner umfassend einen aktiven Entfernungsabschnitt (F), welcher ausgebildet ist, einen Überschuss an Saatgut (13) von dem langen Basisblatt (11) aktiv zu entfernen, und welcher auf den Saatgut-Fixierungsabschnitt (E) folgt.

6. Verfahren zur Erzeugung eines Saatgutpapiers (10) für Hydroponikkultur, umfassend folgende aufeinanderfolgenden Prozesse:
einen Adhäsivmaterial-Aufbringungsprozess, welcher ausgebildet ist, ein wasserlösliches Adhäsivmaterial (12) auf eine Oberfläche eines langen Basisblatts (11) in einem vorbestimmten Intervall aufzubringen;
einen Saatgut-Platzierungsprozess, welcher ausgebildet ist, mehrere Samen (13) auf die Oberfläche des langen Basisblatts (11) zu platzieren;
einen Saatgut-Entfernungsprozess in einem Entfernungsabschnitt (D), welcher ausgebildet ist, von dem langen Basisblatt (11) einen Samen (13) zu entfernen, der darin versagt, an dem langen Basisblatt (11) zu haften; und
einen Saatgutfixierungsprozess, welcher ausgebildet ist, das lange Basisblatt (11), welches den Entfernungsabschnitt (D) durchlaufen hat, durch Walzen des langen Basisblatts (11) zwischen einem Paar von Rollen (51, 52), welche weicher sind als das Saatgut (13), zu transportieren, wobei die Rolle (52), die sich auf einer Seite des Saatguts (13) befindet, härter ist als die auf einer Seite des langen Basisblatts (11) befindlichen Rolle (51).

## Revendications

1. Appareil de production de papier ensemencé pour culture hydroponique (10) comprenant :
a) une section d'introduction de feuille de base (A) configurée pour introduire une longue feuille de base (11) ;
b) une section d'application d'adhésif (C) configurée pour appliquer un adhésif soluble dans l'eau (12) à une surface de la longue feuille de base (11) introduite à partir de la section d'introduction de feuille de base (A), à un intervalle prédéterminé ;
c) une section de disposition de semence (D) configurée pour disposer de multiples semences (13) sur la surface de la longue feuille de base ;
d) une section de prélèvement (D) configurée pour prélever, de la longue feuille de base (11), une semence (13) qui fait défaut pour la faire adhérer sur la longue feuille de base (11) ; et
e) une section de fixation de semence (E) configurée pour transporter la longue feuille de base (11) qui est passée à travers la section de prélèvement (D) par laminage de la longue feuille de base (11) entre une paire de rouleaux (51, 52) plus souples que la semence (13), dans lequel le rouleau (52) qui est disposé sur un côté de la semence (13) est plus dur que le rouleau (51) qui est disposé sur un côté de la longue feuille de base (11).

2. Appareil de production de papier ensemencé pour culture hydroponique (10) selon la revendication 1, dans lequel
la section de fixation de semence (E) tourne de sorte que la longue feuille de base (11) est transportée de manière intermittente avec un pas prédéterminé.

3. Appareil de production de papier ensemencé pour culture hydroponique (10) selon l'une quelconque des revendications 1 et 2, comprenant de plus une section tampon (B) configurée pour laisser la longue feuille de base (11) s'affaisser, entre la section d'introduction de feuille de base (A) et la section de fixation de semence (E).

4. Appareil de production de papier ensemencé pour culture hydroponique (10) selon l'une quelconque des revendications précédentes, comprenant de plus une section de maintien de feuille de base (J1) configurée pour aspirer la longue feuille de base (11) vers une surface de transport (35), entre la section d'introduction de feuille de base (A) et la section de fixation de semence (E).

5. Appareil de production de papier ensemencé pour culture hydroponique selon l'une quelconque des revendications précédentes, comprenant de plus une section de prélèvement actif (F) configurée pour prélever activement une semence en excès (13) de la longue feuille de base (11), après la section de fixation de semence (E).

6. Procédé pour la production d'un papier ensemencé (10) pour culture hydroponique, comprenant les procédés successifs suivants :
un procédé d'application d'adhésif configuré pour appliquer un adhésif soluble dans l'eau (12) à une surface d'une longue feuille de base (11) à un intervalle prédéterminé ;
un procédé de disposition de semence configuré pour disposer de multiples semences (13) sur la surface de la longue feuille de base (11) ;
un procédé de prélèvement de semence dans une section de prélèvement (D) configurée pour prélever, de la longue feuille de base (11), une semence (13) qui fait défaut pour la faire adhérer à la longue feuille de base (11) ; et
un procédé de fixation de semence configuré pour transporter la longue feuille de base (11) qui est passée à travers la section de prélèvement (D) par laminage de la longue feuille de base (11) entre une paire de rouleaux (51, 52) plus souples que la semence (13), dans lequel le rouleau (52) qui est disposé sur un côté de la semence (13) est plus dur que le rouleau (51) sur un côté de la longue feuille de base (11).
